# EUROPÄISCHE PATENTSCHRIFT

(11) **EP 0 530 756 B1**
(45) Veröffentlichungstag und Bekanntmachung des Hinweises auf die Patenterteilung: **15.05.1996**
(21) Anmeldenummer: 92114962.1
(22) Anmeldetag: 02.09.1992
(51) Int. Cl.: B65G 47/71

(54) **Vorrichtung zum Verbreitern eines einspurigen Förderstromes aufrechtstehender Behälter**
Device for widening a single track conveying stream of upright standing containers
Dispositif pour élargir d'un flux de convoyage à piste unique des containers verticaux

(30) Priorität: 06.09.1991 DE 4129710
(43) Veröffentlichungstag der Anmeldung: 10.03.1993
(73) Patentinhaber: ORTMANN + HERBST Maschinen- und Anlagenbau GmbH, D-22309 Hamburg (DE)
(72) Erfinder: Hanstein, Dieter, W-2077 Grossensee (DE)
(74) Vertreter: Schaefer, Konrad, Dipl.-Phys.

(56) Entgegenhaltungen:
- EP-A- 0 183 309
- AT-B- 386 998

## Beschreibung

Die Erfindung bezieht sich auf eine Vorrichtung nach dem Oberbegriff des Anspruches 1.

Gattungsgemäße Vorrichtungen werden z.B. bei Flaschenbehandlungsanlagen eingesetzt, bei denen die Flaschen mit Förderbändern zwischen einzelnen Behandlungsstationen transportiert werden. Solche Behandlungsstationen sind z.B. Inspektoren, Füllmaschinen oder Etikettierer. Die Flaschen werden einspurig in die Stationen hinein- und auch wieder hinausgeführt, zwischen den Stationen werden sie jedoch in einem mehrspurigen Förderstrom bewegt. Der Übergang zwischen ein- und mehrspurigem Förderstrom erfolgt mit Hilfe der gattungsgemäßen Vorrichtungen.

Durch den Stand der Technik sind bereits eine Reihe gattungsgemäßer Vorrichtungen bekannt geworden. So offenbart z.B. die europäische Patentanmeldung 0 183 309 eine Vorrichtung, die mit einem in Form einer Kurve ausgebildeten Mehrbandförderer arbeitet. Der Mehrbandförderer ist quer zur Laufrichtung derart geneigt, daß die Kurve nach außen hin abfällt. Auf die auf dem bekannten Mehrbandförderer bewegten Flaschen wirkt damit quer zur Laufrichtung eine Kraft, die sich aus den Komponenten Hangabtrieb und Zentrifugalkraft zusammensetzt. Beide Komponenten sollen so zusammenwirken, daß eine lärmreduzierte und beschädigungsarme Auffächerung eines einspurigen Flaschenstromes möglich ist.

Nachteilig an der bekannten Vorrichtung ist jedoch, daß die Flaschen während des Auffächerungsvorganges möglicherweise umfallen können. Außerdem ist es fraglich, ob sich die bekannte Vorrichtung auch für Kunststoffflaschen einsetzen läßt.

Ausgehend von dem zitierten Stand der Technik ist es die Aufgabe der Erfindung, eine Vorrichtung zu schaffen, mit der sich ein einspurig geführter Behälterstrom lärmarm und sicher auffächern läßt und darüber hinaus auch eine Verbreiterung eines einspurigen Stromes von Kunststoffflaschen ermöglicht.

Gelöst wird diese Aufgabe durch eine Vorrichtung mit den kennzeichnenden Merkmalen des Anspruches 1.

Die erfindungsgemäße Vorrichtung besitzt danach ein Leitelement, das der Spur, auf der die Behälter in die Kurve einlaufen, zugeordnet ist. Diese Spur wird im folgenden als Startspur bezeichnet. Erfindungsgemäß ist das Leitelement in sich gerade ausgebildet. Es erstreckt sich im wesentlichen parallel zur Startspur bis in die Kurve hinein. Zu Beginn der Kurve drängt das Leitelement die auf der Startspur auf Stoß beförderten Behälter auf eine nach außen hin benachbarte Spur und gibt sie dort frei.

In der erfindungsgemäßen Vorrichtung werden die Behälter damit einer geschlossenen Reihe nacheinander gleitend auf eine langsamere, der Startspur benachbarte Spur geschoben. Dies führt zu einem Rückstau. Der Rückstau bewirkt, daß die Behälterfront auch nach Freigabe durch das Leitelement auf noch weiter außenliegende Spuren geschoben wird. Gleichzeitig werden einzelne Behälter aus der Reihe in Förderrichtung herausgedrückt. Aufgrund des runden Querschnittes führen diese herausgedrückten Behälter eine Abrollbewegung an den vorhergehenden und den nachfolgenden Behältern aus. Diese Abrollbewegung ist relativ lärmarm, da ein Zusammenstoßen der Behälter unterbleibt. Das erfindungsgemäß eingesetzte Leitelement erlaubt also in Verbindung mit dem kurvenförmigen Mehrbandförderer eine effektive und lärmarme Auflockerung und gleichzeitige Verbreiterung eines einspurigen Behälterstromes.

Im Prinzip ließe sich ein derartiger Verbreiterungseffekt auch erreichen, wenn man die Geschwindigkeit der Startspur so hoch wählt, daß die Behälter zu Beginn der Kurve aufgrund der Zentrifugalkraft nach außen rutschen. Man könnte dann auf das Leitelement verzichten, müßte allerdings die Startspurgeschwindigkeit sehr hoch wählen, was sich insbesondere bei Kunststoffflaschen nachteilig auswirken würde.

Der mit der erfindungsgemäßen Vorrichtung derart aufgefächerte mehrspurige Behälterstrom kann auf einem nachgeschalteten mehrspurigen Abtransporteur, dessen Spuren mit gleicher Geschwindigkeit laufen, zu einem dicht gepackten Behälterstrom vereinigt werden.

Die Vorteile der erfindungsgemäßen Vorrichtung gegenüber dem eingangs zitierten Stand der Technik liegen auf der Hand. Der in der erfindungsgemäßen Vorrichtung eingesetzte kurvenförmige Mehrbandförderer muß nicht quer zur Laufrichtung geneigt werden, wie dies bei der europäischen Anmeldung 0 183 309 erforderlich ist. Bei der bekannten Vorrichtung ist es weiterhin notwendig, daß die Geschwindigkeit der Förderspuren auf den Neigungswinkel des Förderers und umgekehrt abgestimmt wird. Diese Anforderung entfällt bei der erfindungsgemäßen Vorrichtung, da es hier nicht auf die in der Kurve auf die Behälter wirkende Zentrifugalkraft ankommt. Die Geschwindigkeit der Startspur kann bei der erfindungsgemäßen Vorrichtung daher innerhalb realistischer Grenzen frei gewählt werden.

Die aus der europäischen Patentanmeldung 0 183 309 bekannte Vorrichtung arbeitet ohne ein Leitelement. Es sind aus dem Stand der Technik, z.B. der DE-OS 27 27 278 auch Vorrichtungen bekannt geworden, die mit einem Mehrbandförderer arbeiten, bei dem ein schräg zu den Spuren verlaufendes Führungsgeländer die Behälter auf langsamere "Abtransporteurspuren" überführt und dort freigibt. Dieser bekannte Mehrbandförderer beschreibt allerdings keine Kurve.

Demgegenüber hat die erfindungsgemäße Vorrichtung, bei der die Startspur kurvenförmig unter einem in die Kurve reichenden Leitelement weggeführt wird, folgende Vorteile. Der eine Vorteil ist, daß die Behälter alleine dadurch, daß sie in einer Kurve von einer inneren auf äußere Spuren überführt werden, eine relative Verlangsamung erfahren. Mit anderen Worten, die Verlangsamung des Behälterstromes kommt nicht alleine durch die Geschwindigkeitsdifferenz zwischen den einzelnen Förderspuren zustande, sie ist auch darauf zurückzuführen, daß die Behälter auf den äußeren Spuren der Kurve einen weiteren Weg zurücklegen müssen. Die erfindungsgemäße Vorrichtung löst damit in besonders eleganter Weise das Problem, daß einerseits eine Verlangsamung des Behälterstromes in möglichst kurzer Förderdistanz erwünscht ist, andererseits jedoch die Geschwindigkeitsdifferenzen zwischen den einzelnen Bändern einen bestimmten Wert nicht übersteigen dürfen (andererseits würden die Behälter umfallen). Dies ist insbesondere von Vorteil, wenn z.B. ein einspuriger Strom von Kunststoffflaschen verbreitert werden soll. Diese Flaschen vertragen beim übergang von einer Förderspur auf die nächste nur geringe Geschwindigkeitsdifferenzen.

Ein weiterer Vorteil ist, daß die Behälter bei der Überführung von der Startspur zu der außen benachbarten Spur des Mehrbandförderers im wesentlichen ihre ursprüngliche Beförderungsrichtung beibehalten. Dadurch verringert sich die Reibung, die die Behälter an dem Leitelement erfahren. Als Folge kommt es zu weniger Beschädigungen der Behälter. Außerdem ist es konstruktiv besonders günstig, wenn das Leitelement über seine gesamte Länge gerade ausgebildet ist.

Vorteilhafte Ausgestaltungen der Erfindung sind in den Ansprüchen 2 bis 6 geschützt. So bietet die Ausgestaltung nach Anspruch 2 eine konstruktive Erleichterung. Hier wird der Tatsache Rechnung getragen, daß zur sicheren Führung der Behälter ein auf der innenliegenden Seite der Startspur ausgebildetes Führungsgeländer ausreicht. Es ist natürlich genauso gut möglich, ein zu beiden Seiten der Flaschen angreifendes Leitelement vorzusehen.

Eine weitere vorteilhafte Ausgestaltung betrifft Anspruch 3. Diese Ausgestaltung erlaubt eine besonders einfache Anpassung der Verbreiterungseigenschaften der erfindungsgemäßen Vorrichtung an unterschiedliche Behältertypen, aber auch an unterschiedliche Bandgeschwindigkeiten. Die Anpassung kann ohne weiteres durch einfache Veränderung der Eindringtiefe des Leitelementes in die Kurve erfolgen.

Anspruch 4 sieht nun vor, daß eine Steuereinheit die Anpassung des Leitelementes regelt. Die Steuereinheit kann entsprechend programmiert nach Eingabe der relevanten Daten, wie z.B. des beförderten Behältertyps und/oder der Bandgeschwindigkeiten eine optimale Leitelementposition wählen und einstellen. Die Steuereinheit kann natürlich auch mit geeigneten Meßvorrichtungen verbunden sein, die die relevanten Daten automatisch erfassen und an die Steuereinheit weiterleiten. Insbesondere der letzte Fall bedeutet eine wesentliche Bedienungserleichterung und gewährleistet eine schnelle Anpassung an unterschiedliche Bedingungen.

Die in den Ansprüchen 5 und 6 geschützten Ausgestaltungen bewirken schließlich, daß die Behälter nach Freigabe durch das Leitelement versetzt zueinander angeordnet sind. Dadurch wird in vorteilhafter Weise das Abrollverhalten der Behälter während der Verbreiterung gefördert. Dies fährt einerseits bei z.B. Glasbehältern zu einer weiteren Lärmreduzierung, bei Kunststoffbehältern können die Ausgestaltungen nach den Ansprüchen 5 und 6 mit dazu beitragen, daß diese besonders sicher ohne die Gefahr eines Umfallens aufgefächert werden.

Im folgenden soll die Erfindung anhand von zwei Abbildungen, die unterschiedliche Ausführungsbeispiele zeigen, näher erläutert werden.
- Fig. 1 zeigt: eine Ausführung, bei der das Leitelement unterschiedlich tief in die Kurve verschiebbar ausgebildet ist.
- Fig. 2 zeigt: ein Ausführungsbeispiel der Erfindung, bei dem der kurvennahe Endbereich des Leitelementes quer in die Startspur hinein verschwenkt werden kann.

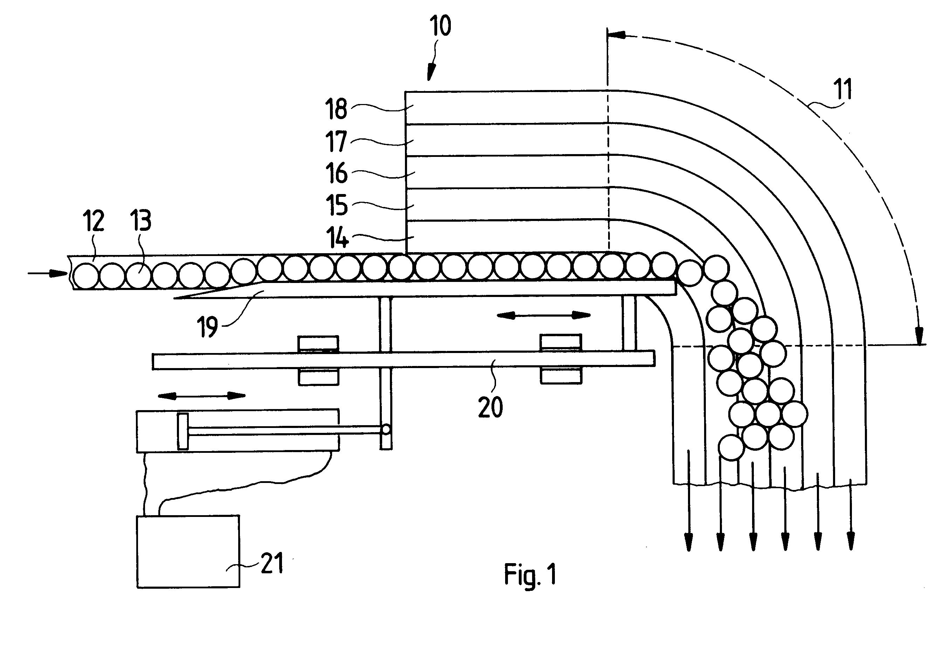

Fig. 1 zeigt einen Mehrbandförderer 10 mit einer Kurve 11. Eine Startspur 12 führt einen einspurigen geschlossenen Strom von Behältern 13 an die Kurve 11 in Pfeilrichtung heran. Der Mehrbandförderer 10 besitzt weitere, der Startspur 12 nach außen hin benachbarte Spuren 14 - 18. Diese Spuren 14 - 18 laufen mit nach außen hin abnehmender Geschwindigkeit gegenüber der Startspur 12. Weiterhin ist ein Leitelement 19 vorgesehen, das, bezogen auf die Kurve 11, innenliegend seitlich neben der Startspur 12 ausgebildet ist. Das Leitelement 19 verläuft bis zur Kurve 11 parallel zu der Startspur 12 und erstreckt sich dann gerade in die Kurve 11 hinein.

Das Leitelement 19 gerät mit den auf der Startspur 12 beförderten Behältern 13 in seitlichen Eingriff und drängt diese zu Beginn der Kurve 11 auf die benachbarte Spur 14. Da die Spur 14 langsamer als die Startspur 12 läuft, werden die abgedrängten Behälter 13 gegenüber ihrer ursprünglichen Fördergeschwindigkeit abgebremst, wodurch es zu einer Art Rückstau kommt. Dieser Rückstau bewirkt, daß sich die jeweils vom Leitelement 19 freigegebenen Behälter 13 gleitend auf die Spur 14 bewegen und gegebenenfalls über diese auf die Spuren 15 und 16 etc. geschoben werden. Wie weit die Behälterfront in die Kurve 11 hineingeschoben wird, hängt unter anderem von der Geschwindigkeit der Startspur 12 sowie den Geschwindigkeiten der benachbarten Spuren 14 bis 18, der Eindringtiefe des Leitelementes 19 in die Kurve 11 und auch von den Flaschen 13 (bzw. den Behältern) selbst ab. Der Verteilungseffekt kommt dadurch zustande, daß einzelne Flaschen 13 aus dem gleitend geschobenen Behälterstrom herausgedrückt und dann von einer der Spuren 14 - 18, auf der sie sich zu diesem Zeitpunkt gerade befinden, unter Haftreibung mitgenommen werden. Das Herausdrücken erfolgt meistens in Form einer Abrollbewegung der Flaschen 13 aneinander.

Fig. 1 zeigt weiterhin, daß das Leitelement 19 in Richtung der Startspur 12 verschiebbar an einem Verstellbalken 20 gelagert ist. Das Leitelement 19 kann so unterschiedlich tief in die Kurve 11 hinein geführt werden, wobei sich jeweils unterschiedliche Verbreiterungseffekte erzielen lassen. Auf diese Weise ist z.B. eine Anpassung an unterschiedliche Bandgeschwindigkeiten, aber auch an Behälter mit unterschiedlichen Durchmessern möglich.

Eine Steuereinheit 21 dient zur Einstellung der Position des Leitelementes 19. Die Steuereinheit 21 kann die Eindringtiefe des Leitelementes 19 in die Kurve 11 in Abhängigkeit von unterschiedlichen Faktoren, wie z.B. Behältertyp und Bandgeschwindigkeiten, vorgeben. Damit läßt sich auch unter variierenden Bedingungen ein optimaler Verbreiterungseffekt gewährleisten.

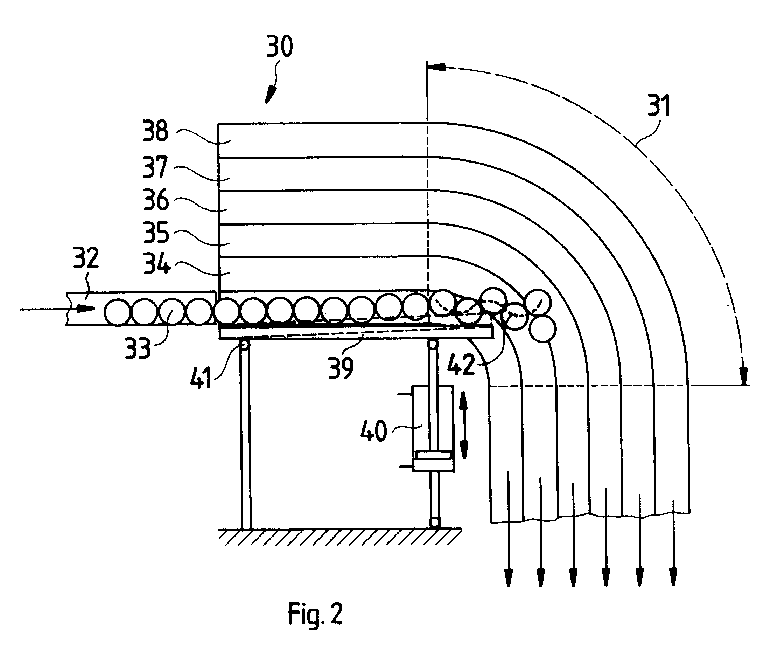

Fig. 2 zeigt eine weitere Ausführung der erfindungsgemäßen Vorrichtung, die in wesentlichen Bestandteilen mit der in Fig. 1 gezeigten Vorrichtung übereinstimmt. Auch hier ist ein Mehrbandförderer 30 vorgesehen, der eine Kurve 31 beschreibt. Behälter 33 werden auf einer Startspur 32 an die Kurve 31 herangeführt. Der Mehrbandförderer besitzt schließlich der Startspur 32 nach außen hin benachbarte Spuren 34 bis 38, die mit abnehmender Geschwindigkeit laufen. Weiterhin ist ein der Startspur 32 zugeordnetes Leitelement 39 vorgesehen.

Im Unterschied zu Fig. 1 läßt sich das Leitelement 39 mit seinem kurvennahen Ende mit vorgegebener Frequenz in die Startspur 32 hinein und auch wieder hinaus verschwenken. Die Auslenkung erfolgt mittels eines drehbar gelagerten Hubzylinders 40, der am kurvennahen Ende des in 41 drehbar gelagerten Leitelementes 39 angreift.

Eine Linie 42 zeigt, welchen Effekt die Hin- und Herbewegung des Leitelementes 39 auf die Verteilung der Behälter 33 im Anfangsbereich der Kurve 31 hat. Man erkennt, daß die Behälter 33 bereits zueinander versetzt von dem Leitelement 39 freigegeben werden. Es ist einsichtig, daß dadurch das Herausdrücken bzw. der Abrolleffekt der Behälter 33 aneinander gefördert wird. Dies führt zu einer weiteren Verringerung der Lärmemission.

Selbstverständlich kann das in Fig. 2 gezeigte Leitelement 39 auch in Richtung der Startspur 32 mit vorgegebener Frequenz verschiebbar angeordnet sein. Auch so kann ein verbessertes Abrollverhalten der Behälter aneinander bewirkt werden.

## Patentansprüche

1. Vorrichtung zur Verbreiterung eines Förderstromes aufrechtstehender Behälter (13, 33) von rundem Querschnitt, mit einem Mehrbandförderer (10, 30), in dem eine Kurve (11, 31) vorgesehen ist und dessen Förderspuren (12, 14-18; 32, 34-38) bezogen auf die Kurve (11, 31) nach außen hin abnehmende Geschwindigkeiten aufweisen, **dadurch gekennzeichnet**, daß einer Startspur (12, 32) des Mehrbandförderers (10, 30), auf der Behälter (13, 33) in die Kurve (11, 31) einlaufen, ein Leitelement (19, 39) zugeordnet ist, das die Behälter (13, 33) zu Beginn der Kurve (11, 31) auf eine der der Startspur (12, 32) nach außen hin benachbarten Spuren (14 - 18, 34 - 38) drängt und dort freigibt, wobei das Leitelement (19, 39) in sich gerade ist und sich bis zur Kurve (11, 31) im wesentlichen parallel zur Startspur (12, 32) sowie darüber hinaus in die Kurve (11, 31) hinein erstreckt.

2. Vorrichtung nach Anspruch 1, **dadurch gekennzeichnet**, daß das Leitelement (19, 39) ein auf der Innenseite der Startspur (12, 32) ausgebildetes Führungsgeländer ist.

3. Vorrichtung nach einem der Ansprüche 1 oder 2, **dadurch gekennzeichnet**, daß Vorrichtungen (20) vorgesehen sind, mit denen sich das Leitelement (19) unterschiedlich tief in die Kurve (11) hineinführen läßt.

4. Vorrichtung nach Anspruch 3, **dadurch gekennzeichnet**, daß eine Steuervorrichtung (21) vorgesehen ist, die die Eindringtiefe des Leitelementes (19) in die Kurve (11) in Abhängigkeit von den Bandgeschwindigkeiten und/oder den beförderten Behältern (13) einstellt.

5. Vorrichtung nach einem der Ansprüche 3 oder 4, **dadurch gekennzeichnet**, daß die Eindringtiefe des Leitelementes (19) in die Kurve (11) mit vorgegebener Frequenz veränderbar ist.

6. Vorrichtung nach einem der Ansprüche 1 bis 5, **dadurch gekennzeichnet**, daß das Leitelement (39) zumindest mit seinem kurvennahen Endbereich mit vorgegebener Frequenz und vorgegebenem Hub quer zur Startspur (32) bewegbar ausgebildet ist.

## Claims

1. Apparatus for widening a conveyed stream of upright containers (13,33) of round cross-section with a multi-belt conveyor (10,30), in which a curve (11,31) is provided and whose conveyor tracks (12,14-18;32,34-38) have decreasing speeds in the outward direction with respect to the curve (11,31), characterised in that associated with the start track (12,32) of the multi-belt conveyor (10,30), on which containers (13,33) move into the curve (11,31), is a guide element (19,39) which forces the containers (13,33) at the beginning of the curve (11,31) onto one of the tracks (14-18,34-38) outwardly adjacent to the start track (12,32) and releases them there, whereby the guide element (19,39) is itself straight and extends to the curve (11,31) substantially parallel to the start track (12,32) and beyond into the curve (11,31).

2. Apparatus as claimed in claim 1, characterised in that the guide element (19,39) is a guide rail constructed on the inner side of the start track (12,32).

3. Apparatus as claimed in one of claims 1 or 2, characterised in that devices (20) are provided with which the guide element (19) may be advanced to differing depths into the curve (11).

4. Apparatus as claimed in claim 3, characterised in that a control device (21) is provided which sets the depth of penetration of the guide element (19) into the curve (11) in dependence on the belt speeds and/or the conveyed containers (13).

5. Apparatus as claimed in one of claims 3 or 4, characterised in that the depth of penetration of the guide element (19) into the curve (11) is alterable at a predetermined frequency.

6. Apparatus as claimed in one of claims 1 to 5, characterised in that the guide element (39) is constructed to be movable, at least with its end region close to the curve, transverse to the start track (32) at a predetermined frequency and a predetermined stroke.

## Revendications

1. Dispositif d'élargissement d'un flux de convoyage de conteneurs (13, 33) à section ronde transportés en position verticale au moyen d'un convoyeur multipiste (10, 30) formant une courbe (11, 31) et dont les pistes de convoyage (12, 14-18; 31, 34-38) avancent à des vitesses décroissantes vers l'extérieur relativement à la courbe (11, 31), caractérisé en ce qu'une piste de départ (12, 32) du convoyeur multipiste (10, 30) sur laquelle les conteneurs (13, 33) entrent dans la courbe (11, 31) est munie d'un élément de guidage (19, 39) qui chasse les conteneurs (13, 33) à l'entrée de la courbe (11, 31) vers des pistes extérieures (12, 14-18; 31, 34-38) voisines de la piste de départ (12, 32), cet élément de guidage (19, 39) étant de forme rectiligne et s'étendant essentiellement parallèlement à la piste de départ (12, 32) pour pénétrer jusque dans la courbe (11, 31).

2. Dispositif selon la revendication 1, caractérisé en ce que l'élément de guidage (19, 39) est constitué par une rampe de guidage située le long du bord intérieur de la piste de départ (12, 32).

3. Dispositif selon l'une des revendications 1 ou 2, caractérisé en ce qu'il est équipé de dispositifs (20) permettant de faire pénétrer l'élément de guidage (19) sur une profondeur variable dans la courbe (11).

4. Dispositif selon la revendication 3, caractérisé en ce qu'il est équipé d'un dispositif de commande (21) dont la fonction est de régler la profondeur de pénétration de l'élément de guidage (19) dans la courbe (11) en fonction de la vitesse du convoyeur et/ou des conteneurs transportés.

5. Dispositif selon l'une des revendications 3 ou 4, caractérisé en ce que la profondeur de pénétration de l'élément de guidage (19) dans la courbe (11) est variable selon une fréquence prédéfinie.

6. Dispositif selon l'une des revendications 1 à 5, caractérisé en ce que l'élément de guidage (39) est conçu de façon à pouvoir, au moins avec son extrémité proche de la courbe, pivoter transversalement à la piste de départ (32) à une fréquence et sur une course prédéfinies.
